# EUROPÄISCHE PATENTSCHRIFT

(11) **EP 0 300 123 B1**
(45) Veröffentlichungstag und Bekanntmachung des Hinweises auf die Patenterteilung: **27.10.1993**
(21) Anmeldenummer: 88102999.5
(22) Anmeldetag: 11.11.1981
(51) Int. Cl.: H02K 29/06, H02K 41/02

(54) **Elektrischer Antrieb oder Generator**
Electrical drive or generator
Entraînement électrique ou générateur

(30) Priorität: 11.11.1980 DE 8030107 U
(43) Veröffentlichungstag der Anmeldung: 25.01.1989
(62) Teilanmeldung aus: 81109637.9
(73) Patentinhaber: MAGNET-MOTOR GESELLSCHAFT FÜR MAGNETMOTORISCHE TECHNIK MBH, D-82319 Starnberg (DE)
(72) Erfinder: Heidelberg, Götz, Dipl.-Phys., D-8136 Percha (DE); Gründl, Andreas, Dr., D-8000 München 70 (DE); Rosner, Peter, Dr., D-8000 München 2 (DE)
(74) Vertreter: Schmitt-Nilson, Gerhard, Dr.

(56) Entgegenhaltungen:
- DD-A- 106 509
- DE-A- 1 613 758
- DE-B- 2 128 996
- FR-A- 2 068 155

## Beschreibung

Gegenstand der Erfindung ist ein elektrischer Antrieb oder Generator, aufweisend:
(a) einen mit Stromleitern versehenen Stator und einen magnetisch mit dem Stator zusammenwirkenden Läufer, die mit einem Spaltabstand zwischen sich angeordnet sind;
(b) mindestens einen, am Stator vorgesehenen Sensor, der die Relativstellung von Stator und Läufer erfaßt, wobei eine Verstellbarkeit hinsichtlich derjenigen Position des Läufers, bei der der Sensor anspricht, vorgesehen ist; und
(c) eine von dem Sensor gesteuerte elektronische Schalteinrichtung, die bei antriebsgerechter bzw. generatorgerechter Relativstellung von Stator und Läufer eine elektrische Verbindung zwischen den Stromleitern und einer Stromquelle bzw. Stromsenke herstellt,
dadurch gekennzeichnet,
(d) daß der Läufer mit Dauermagneten versehen ist, die mit dem Stator zusammenwirken;
(e) daß am Läufer gesonderte Steuer-Dauermagnete angeordnet sind und der Sensor als auf die Steuer-Dauermagnete ansprechender Sensor ausgebildet und angeordnet ist; und
(f) daß die Steuer-Dauermagnete gegenüber dem Läufer oder der auf die Steuer-Dauermagnete ansprechende Sensor gegenüber dem Stator in Richtung der Relativbewegung von Stator und Läufer verschiebbar sind (ist).

Ein Elektromotor mit den im vorhergehenden Absatz angegebenen Merkmalen (a), (b) und (c) ist aus dem Dokument DE-A-1 613 758 bekannt. Der bekannte Elektromotor ist nicht mit Dauermagneten am Läufer aufgebaut, sondern arbeitet nach dem Reluktanzprinzip. Gesonderte Steuer-Dauermagnete sind nicht vorhanden. Bei dem bekannten Elektromotor ist der Sensor, der die Relativstellung von Stator und Läufer erfaßt, gegenüber dem Stator in Richtung der Relativbewegung von Stator und Läufer verschiebbar (vgl. das im vorhergehenden Absatz angegebene Kennzeichnungsmerkmal (f), 2. Alternative).

Durch die Erfindung wird ein selbststeuernder Antrieb oder Generator mit besonders einfacher Steuermöglichkeit geschaffen. Die erfindungsgemäße Ausbildung des Antriebs oder Generators gibt die einfache Möglichkeit, die normale Antriebs- oder Generatorfunktion zu modifizieren, beispielsweise die Geschwindigkeit des Antriebs Zu ändern, den Anbrieb oder den Generator auszuschalten, von Antriebsfunktion auf Generatorfunktion umzuschalten und umgekehrt, oder die Richtung des Antriebs bzw. die Stromrichtung des vom Generator gelieferten Stroms umzukehren.

Bei einem Antrieb oder Generator mit sensorgesteuerter elektronischer Schalteinrichtung sorgt diese selbsttätig dafür, daß bei passenden Relativstellungen von Stator und Läufer den Leitern Strom zugeführt oder von den Leitern Strom abgeführt wird. Die Leiter sind in den meisten Fällen in Form von Spulen oder Wicklungen vorgesehen. In vielen Fällen ist es günstig und daher bevorzugt, mehrere Sensoren längs der Bewegungsbahn des Läufers am Stator entlang vorzusehen. Obwohl im Anspruch 1 von "Stromleitern" und "Dauermagneten" gesprochen ist, soll der untere Grenzfall von nur einem Stromleiter oder nur einem Dauermagnet mit umfaßt sein.

Die Ausdrucksweise "Antrieb oder Generator" soll nicht bedeuten, daß ein und dasselbe Aggregat in der Lage sein muß, diese beiden Funktionen wahlweise zu erfüllen. Es soll vielmehr zum Ausdruck gebracht werden, daß nach der Lehre der Erfindung sowohl ein Antrieb bzw. Motor als auch ein Generator erstellt werden kann. Nach der Lehre der Erfindung kann man allerdings auch ein Aggregat erstellen, das sowohl als Antrieb als auch als Generator arbeiten kann, was weiter unten noch deutlicher werden wird.

Die verwendeten Begriffe "Stator" und "Läufer" sollen nicht bedeuten, daß der Stator unbedingt der unbewegt bleibende Teil des Antriebs oder des Generators und der Läufer unbedingt der sich bewegende Teil des Antriebs oder des Generators ist. Vielmehr sind beide Möglichkeiten, also sich bewegender Stator mit unbewegt bleibendem Läufer und unbewegt bleibender Stator mit sich bewegendem Läufer, ausführbar, sogar die Möglichkeit, daS sich sowohl Stator als auch Läufer mit unterschiedlicher Geschwindigkeit bewegen. Der Fall des unbewegt bleibenden Stators ist jedoch bevorzugt, da diesem Strom zugeführt bzw. von diesem Strom abgeführt werden muß.

Bevorzugte Weiterbildungen der Erfindung sind in den abhängigen Ansprüchen angegeben.

Wegen zahlreicher Vorteile ist es besonders bevorzugt, den Stator in mehrere Abschnitte aufzuteilen, denen jeweils eine Schalteinrichtung zugeordnet ist. Vorzugsweise, insbesondere bei Linearstatoren, ist pro Statorabschnitt mindestens ein Sensor vorgesehen. Vorzugsweise sind die Statorabschnitte kürzer als der Läufer, so daß sich die Antriebs- oder Generatorfunktion auf mehrere Statorabschnitte verteilt. Da pro Abschnitt geringere Ströme bzw. Leistungen verarbeitet werden müssen, ergibt sich eine Verteilung der elektrischen Verluste. Da pro Abschnitt von der jeweiligen Schalteinrichtung geringere Ströme bzw. Leistungen bewältigt werden müssen, kommt man mit Schalteinrichtungen kleinerer Leistung aus, wodurch deren Preis ganz wesentlich überproportional sinkt. Damit einher geht die Verringerung des Kühlaufwandes für die Schalteinrichtungen, die Erhöhung der Redundanz bzw. Zuverlässigkeit, da der Ausfall einzelner Abschnitte die Gesamtfunktion nicht stört, und eine Vereinfachung der Wartung durch Austausch vergleichsweise billiger einzelner Schalteinrichtungen. Schließlich kommt man auch insgesamt in einen niedrigeren Spannungsbereich, da die Gegen-EMK pro Abschnitt klein bleibt und man sich in der vom Isolationsaufwand und damit vom Preisaufwand her günstigen VDE-Klasse bis 1ooo V halten kann. Es ist also alles in allem sehr viel günstiger, statt eines einzigen oder weniger Abschnitte jeweils mit einer Schalteinrichtung die Zahl der Abschnitte und Schalteinrichtungen zu erhöhen und dafür eine größere Zahl von Schalteinrichtungen, die jedoch einzeln eine niedrigere Schaltleistung haben, vorzusehen. Im unteren Grenzfall besteht ein Statorabschnitt aus einem einzigen Stromleiterpaar bzw. einer einzigen Spule.

Für viele Anwendungsbereiche, beispielsweise Linearantriebe, macht man den Läufer wesentlich kürzer als den Stator. Insbesondere in diesem Fall ist es besonders vorteilhaft, die Länge der Abschnitte mindestens so groß zu machen wie die Länge der Steuermagnetreihe, das heißt die Länge der in Läuferbewegungsrichtung auf dem Läufer hintereinander angeordneten Steuermagnete.

Jeder Stromleitergruppe eines Abschnittes, wenn für die weiteren Überlegungen einmal vereinfachend angenommen ist, daß alle gleichzähligen Stromleiter eines ganzen Abschnittes elektrisch zusammengeschaltet sind, sind vorzugsweise wenigstens zwei Sensoren zugeordnet, vorteilhafterweise einer am Anfang und der andere am Ende des jeweiligen Abschnittes. Mit Hilfe des einen Sensors kann man die zugeordnete Stromleitergruppe einschalten, sobald der Läufer in den zugehörigen Abschnitt eintritt, und mit Hilfe des zweiten Sensors kann man die zugehörige Stromleitergruppe wieder abschalten, wenn der Läufer den zugehörigen Absatz verläßt.

Besonders bevorzugt ist aber eine Verteilung der Sensoren längs des Stators derart, daß bei jeder Läuferstellung für jede der Stromleitergruppen einer der ihr zugeordneten Sensoren von dem am Läufer angeordneten Steuermagneten bzw. anderen Steuereinrichtungen beeinflußbar ist. Durch diese Sensorverteilung wird erreicht, daß man die jeweils betrachtete Stromleitergruppe solange eingeschaltet hält, wie von einem der dieser Stromleitergruppe zugeordneten Sensoren das Vorhandensein des Läufers im Bereich dieser Stromleitergruppe, vorzugsweise im Bereich des mit dieser Stromleitergruppe übereinstimmenden Abschnittes, festgestellt wird. Man umgeht dabei Probleme, die besonders dann, wenn der Läufer in Vorwärts- und Rückwärtsrichtung bewegbar sein soll, dadurch auftreten können, daß ein Teil der Sensoren eine Einschaltung und der Rest der Sensoren eine Abschaltung der Erregung der zugehörigen Stromleitergruppen bewirken soll.

Eine bevorzugte Verwendung des nach den beschriebenen Prinzipien aufgebauten, erfindungsgemäßen Linearantriebs oder Lineargenerators liegt beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen. Bei all diesen Einsatzzwecken kommen der einfache konstruktive Aufbau und die vielfältigen Regelungsmöglichkeiten zum Tragen.

Vorstehend ist auch dann, wenn an sich die Antriebsfunktion im Vordergrund stand, vielfach von "Antrieb oder Generator" gesprochen worden. Dies ist geschehen, um zu betonen, daß auch bei Antrieben eine Umschaltbarkeit auf Generatorfunktion zum Bremsen vorgesehen sein kann.

Eine weitere bevorzugte Verwendung des nach den Prinzipien der Erfindung aufgebauten Antriebs besteht im Einsatz als rotatorischer oder linearer Positionierantrieb.

Die Erfindung wird im folgenden anhand schematisiert dargestellter Ausführungsbeispiele noch näher erläutert. Es zeigen:
- Fig. 1: einen Längsschnitt durch einen Linearantrieb längs I-I in Fig. 4;
- Fig. 2: eine Ansicht von unten auf den Stator des Linearantriebs von Fig. 1 entsprechend II-II in Fig. 1;
- Fig. 3: eine Ansicht von oben auf den Läufer des Linearantriebs von Fig. 1 entsprechend III-III in Fig. 1;
- Fig. 4: einen Querschnitt des Linearantriebs von Fig. 1 längs IV-IV in Fig. 1;

In den verschiedenen Ausführungsbeispielen werden Teile, die sich funktionell entsprechen, mit gleichen Bezugszeichen versehen.

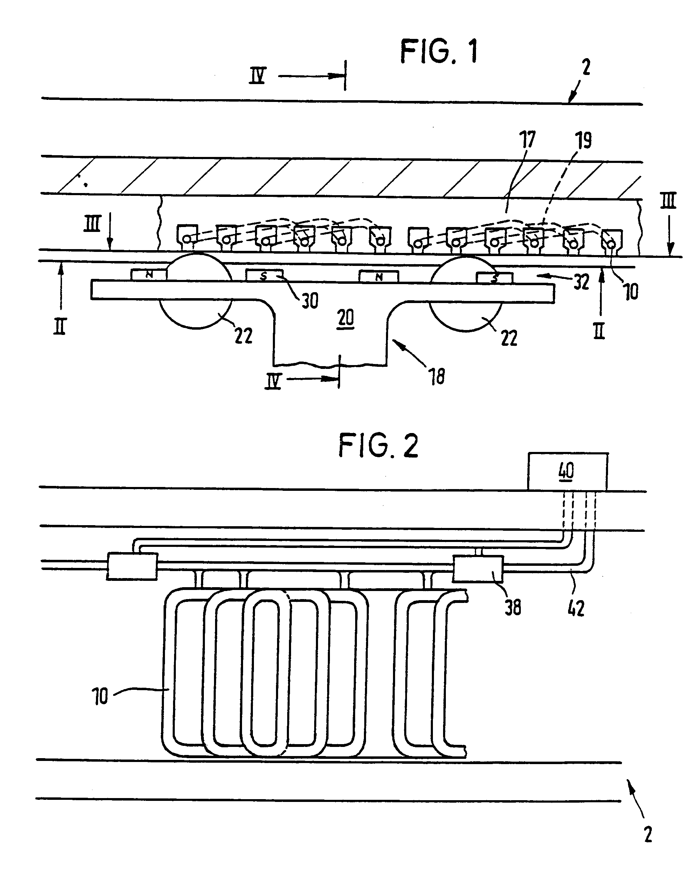

Bei dem in den Fig. 1 bis 4 dargestellten Linearantrieb handelt es sich um einen Antrieb, der für Transporteinheiten praktisch beliebiger Art geeignet ist. Konkret kann man sich ein magnetisch getragenes Fahrzeug zum Transport von Personen oder Lasten vorstellen.

Bei dieser Ausführungsform wird durchgehend aus Vereinfachungsgründen von "Antrieb" gesprochen, obwohl die Auslegung ohne weiteres so getroffen sein kann, daß bei einer Verlangsamung der Geschwindigkeit der Transporteinheit von Antriebsfunktion auf Generatorfunktion umgeschaltet werden kann.

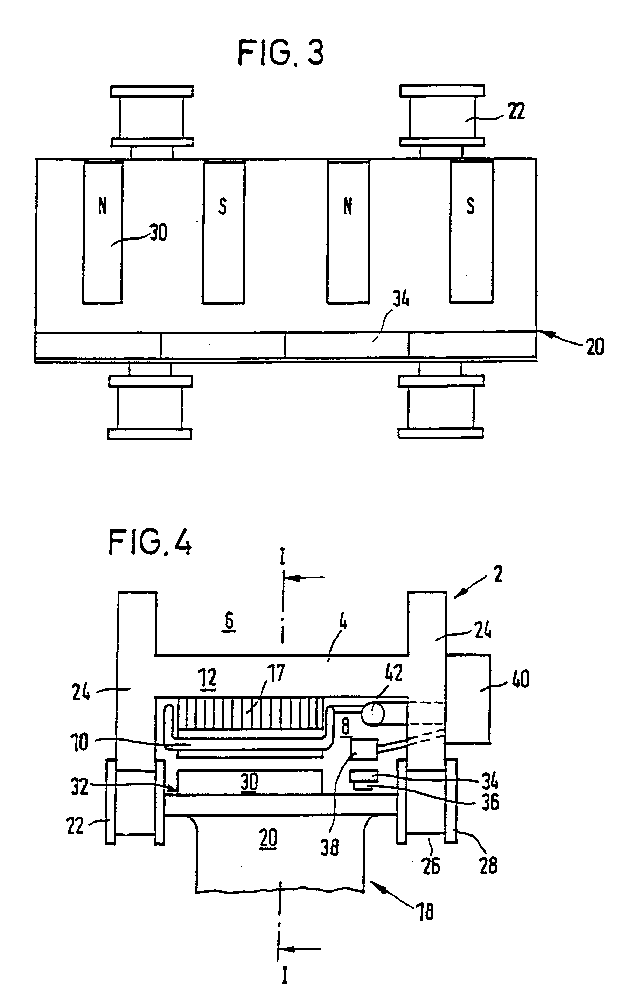

Der tragende Bestandteil des Stators 2 des Antriebs ist als liegender Doppel-T-Träger 4 ausgebildet. Somit entstehen, gesehen im Querschnitt des Trägers 4, eine obere, etwa rechteckige Ausnehmung 6 und eine untere, etwa rechteckige Ausnehmung 8, vgl. Fig. 4.

In der unteren Ausnehmung 8 ist ein Paket 17 aus sich in Längsrichtung erstreckenden, aufrecht stehenden, lamellierten Blechen aus ferromagnetischem Material befestigt. Das Paket 17 weist in seiner Unterseite Quernuten 19 auf, die einen gegenseitigen Mittenabstand haben, der einem Drittel des Mittenabstandes der weiter unten beschriebenen Dauermagnete 30 entspricht. In die Quernuten 19 sind Spulen 10 eingelegt, die in der Draufsicht etwa rechteckig sind. Jede Spule 10 besteht aus mehreren Windungen, wobei in den Zeichnungen aus Vereinfachungsgründen die Spulen jeweils nur aus einem dicken Draht bestehend dargestellt sind. Die quer zur Relativbewegungsrichtung von Stator und Läufer verlaufenden Queräste jeder Spule 10 befinden sich jeweils in einer Quernut 19, während die die Queräste verbindenden Längsäste seitlich des Pakets 17 liegen. Die Queräste jeder Spule 10 lassen zwischen sich zwei Quernuten 19 frei, die von den Querästen benachbarter Spulen besetzt werden. Die Längsäste führen seitlich des Pakets 17 zunächst vom ersten Querast schräg aufwärts und dann unter seitlicher Ausbuchtung nach außen steiler zurück nach unten zum anderen Querast, um auf diese Weise Platz für die Überkreuzung mit den Längsästen der beiden benachbarten Spulen zu schaffen.

Das Paket 17 bildet zusammen mit dem eingelegten Stromleitern 10 den funktionellen Teil des Stators 2.

Statt das Paket 17 mit Quernuten 19 auszubilden, können die zwischen den Quernuten 19 befindlichen Vorsprünge weggelassen werden und können die auf der flachen Unterseite des Pakets 17 angeordneten Spulen 10 mit einer Vergußmasse vergossen werden, die aus Kunststoff mit einem hohen Anteil von darin verteilten Eisenteilchen oder Eisenoxidteilchen sehr kleiner Korngröße von beispielsweise 70 µm besteht. Dabei müssen die Unterseiten der Stromleiter 10 zur Sicherstellung eines geordneten magnetischen Flusses frei von Vergußmasse bleiben.

Von der anzutreibenden Transporteinheit 18 ist nur der obere, mit dem Stator zusammenwirkende Bereich zeichnerisch dargestellt. Dieser obere Teil besteht aus einer Art Wagen 20 mit vier drehbar gelagerten Rädern 22, von denen zwei auf einem senkrechten Schenkel 24 und zwei auf dem anderen senkrechten Schenkel 24 des Trägers 4 abrollen, wobei die Räder 22 jeweils mit einer entsprechenden Spurrille 26 und Spurkränzen 28 versehen sind.

Auf der im wesentlichen ebenen Oberseite des Wagens 20 ist in Bewegungsrichtung hintereinander eine Reihe von Dauermagneten 30 angeordnet. Der unter den Magneten 30 befindliche Bereich des Wagens 20 besteht aus ferromagnetischem Material zur Schaffung eines magnetischen Rückschlusses auf der Rückseite der Dauermagneten 30. Die Dauermagnete 30 bilden zusammen mit diesem Rückschluß den Läufer 32 des Antriebs.

Die Dauermagnete 30 haben die Gestalt von sich quer zur Bewegungsrichtung des Wagens 20 erstreckenden, langgestreckten Quadern. Die Dauermagnete 30 sind, gemessen quer zur Bewegungsrichtung des Wagens 20, etwa so breit wie die Queräste der Stromleiter 10. Die untere Oberfläche der Vergußmasse bzw. des Blechpakets 17 hat einen Abstand von einigen Millimetern von den oberen Polflächen der Magnete 30.

In Bewegungsrichtung des Wagens 20 benachbarte Dauermagnete 30 haben einen Abstand voneinander, der jeweils dem in Bewegungsrichtung gemessenen Abstand der beiden Queräste einer Spule entspricht, jeweils gemessen von Mitte zu Mitte. Die Dauermagnete sind so auf dem Wagen 20 befestigt, daß bei den oberen Polflächen der Dauermagnete 30 Nordpole und Südpole miteinander abwechseln.

Die erste, vierte, siebte usw. Spule, die zweite,fünfte, achte usw. Spule sowie die dritte, sechste, neunte usw. Spule in Bewegungsrichtung des Wagens 20 sind jeweils hintereinandergeschaltet oder parallelgeschaltet. Somit entstehen magnetische Kreise, die jeweils im Stator 2 aus zwei mit räumlich entgegengerichteter Stromrichtung durchflossenen Querästen einer Spule bestehen, wobei der magnetische Fluß durch die wegen der Eisenpulverfüllung einen geringen magnetischen Widerstand aufweisende Vergußmasse bzw. das Blechpaket 17 geführt ist. Der dem Läufer 32 zugeordnete Teil jedes magnetischen Kreises besteht aus zwei Dauermagneten 30 mit dem entsprechenden beschriebenen Rückschluß.

Die Stromleiter 10 und die Dauermagnete 30 nehmen nicht die gesamte Breite zwischen den Stegen 24 bzw. zwischen den Rädern 22 ein. Im verbleibenden Raum des Wagens 20 ist eine weitere Reihe von als Dauermagneten ausgebildeten Steuermagneten 34 vorgesehen, die hinsichtlich Mittenabstand in Bewegungsrichtung des Wagens 20 mit den Dauermagneten 30 übereinstimmen, jedoch in Bewegungsrichtung länger sind, so daß sie aneinanderstoßen. In Normallage befinden sich die Kanten der Steuermagnete 34 in Bewegungsrichtung jeweils in der Mitte zwischen zwei Dauermagneten 30. Die Steuermagnete 34 sind auf einer längs verlaufenden Stange 36 angeordnet und mit Hilfe dieser Stange und eines nicht dargestellten Mechanismus in Bewegungsrichtung des Wagens 20 relativ zu den Dauermagneten 30 verschiebbar. Im verbleibenden Freiraum der unteren Ausnehmung 8 sind gegenüber den Steuermagneten 34 mehrere Hallsonden 38 in Bewegungsrichtung des Wagens 20 verteilt mit geringem Abstand über den Steuermagneten 34 angeordnet. Die Hallsonden 38 liefern ihr Signal "Steuermagnet 34 befindet sich unter der Sonde" an eine Schalteinrichtung 40, die in einem außen an einem Steg 24 metallisch leitend angeschraubten Gehäuse untergebracht ist. Die Schalteinrichtung 40 ist in diesem Gehäuse mit Kunststoff eingegossen, und die Verlustwärme der Schalteinrichtung wird über das Gehäuse an den Steg 24 abgeführt.

Von der Schalteinrichtung führt ein dreiphasiges Kabel 42 entlang dem Träger 4 oberhalb der Hallsonden 38. Dieses Kabel 42 versorgt sämtliche Spulen 10 mit Strom. Es ermitteln die Hallsonden 38 die Relativstellung des Wagens 20 längs des Stators 2, und die Schalteinrichtung 40 sorgt dafür, daß gerade die für die Antriebsfunktion passenden Stromleiter 10 eingeschaltet werden, so daß jeweils eine Vortriebskraft ausübende magnetische Kreise synchron eingeschaltet werden. Der gesamte Stator ist längs in eine Vielzahl von Abschnitten unterteilt, wobei für jeden Abschnitt eine Schalteinrichtung 40 vorgesehen ist. Der Abstand der Hallsonden 38 in Bewegungsrichtung ist kleiner als der Abstand zwischen dem vordersten und dem hintersten Steuermagnet 34 des Wagens 30. Der beschriebene Antrieb ist vollkommen selbststeuernd, da sich der Wagen 20 sozusagen selbst immer zum richtigen Zeitpunkt die richtigen Stromleiter 10 einschaltet.

Durch Verschieben der Stange 36 und damit der Steuermagnete 34 in Bewegungsrichtung des Wagens 20 läßt sich vom Wagen her Einfluß auf die Bewegung des Wagens nehmen. Wenn man zum Beispiel die Steuermagnete 34 auf die Mitte zwischen zwei benachbarte Dauermagnete 30 stellt, findet kein Antrieb statt. Wenn man zum Beispiel die Steuermagnete 34 um einen ganzen Mittenabstand der Dauermagnete 30 verschiebt, erfolgt der Antrieb in die umgekehrte Richtung. Geringere Verschiebungen der Steuermagnete 34 bewirken über eine künstliche Wirkungsgradverschlechterung des Antriebs eine Reduzierung der Vortriebskraft.

Die außen am Träger 4 angeschraubte Schalteinheit 40 ist über Steckverbindungen mit dem Kabel 42 und den Hallsonden 38 verbunden, so daß sie sich bei Defekten leicht auswechseln läßt.

Statt der beschriebenen Art der Spulenanordnung kann man auch mäanderförmig verlegte, beispielsweise in die Quernuten 19 des Stators 2 eingelegte Leiter vorsehen.

Beim dargestellten und beschriebenen Ausführungsbeispiel ist die Auslegung so, daß die magnetische Anziehung in Vertikalrichtung zwischen den Dauermagneten 30 und dem Stator 2 ausreicht, das Gewicht der Transporteinheit 18, gegebenenfalls mit Zuladung,zu tragen. Die Räder 22 sorgen dafür, daß der Luftspalt zwischen den Dauermagneten 30 und der Statorunterseite erhalten bleibt. Man kann aber die Auslegung auch so treffen, daß die Räder 22 oben auf dem Stator 2 abrollen, also das Gewicht der Transporteinheit 18 teilweise magnetisch und teilweise durch die Räder 22 getragen wird, oder daß sowohl auf der Statorunterseite als auch auf der Statoroberseite ablaufende Räder vorgesehen sind.

## Patentansprüche

1. Elektrischer Antrieb oder Generator, aufweisend:
(a) einen mit Stromleitern versehenen Stator (2) und einen magnetisch mit dem Stator (2) zusammenwirkenden Läufer (32), die mit einem Spaltabstand zwischen sich angeordnet sind;
(b) mindestens einen, am Stator (2) vorgesehenen Sensor (38), der die Relativstellung von Stator (2) und Läufer (32) erfaßt, wobei eine Verstellbarkeit hinsichtlich derjenigen Position des Läufers (32), bei der der Sensor (38) anspricht, vorgesehen ist; und
(c) eine von dem Sensor (38) gesteuerte elektronische Schalteinrichtung, die bei antriebsgerechter bzw. generatorgerechter Relativstellung von Stator (2) und Läufer (32) eine elektrische Verbindung zwischen den Stromleitern (10) und einer Stromquelle bzw. Stromsenke herstellt,
dadurch gekennzeichnet,
(d) daß der Läufer (32) mit Dauermagneten (30) versehen ist, die mit dem Stator (2) zusammenwirken;
(e) daß am Läufer (32) gesonderte Steuer-Dauermagnete (34) angeordnet sind und der Sensor (38) als auf die Steuer-Dauermagnete (34) ansprechender Sensor (38) ausgebildet und angeordnet ist; und
(f) daß die Steuer-Dauermagnete (34) gegenüber dem Läufer (32) oder der auf die Steuer-Dauermagnete (34) ansprechende Sensor (38) gegenüber dem Stator (2) in Richtung der Relativbewegung von Stator (2) und Läufer (32) verschiebbar sind(ist).

2. Antrieb oder Generator nach Anspruch 1, dadurch gekennzeichnet, daß eine Reihe von Steuer-Dauermagneten (34) mit seitlichem Abstand von der Reihe der Dauermagneten (30) vorgesehen ist.

3. Antrieb oder Generator nach Anspruch 1 oder 2, dadurch gekennzeichnet, daß die Steuer-Dauermagnete (34) in Richtung der Relativbewegung von Stator (2) und Läufer (32) länger sind als die Dauermagnete (30).

4. Antrieb oder Generator nach einem der vorhergehenden Ansprüche, dadurch gekennzeichnet, daß der Stator (2) in mehrere Abschnitte aufgeteilt ist, denen jeweils eine Schalteinrichtung zugeordnet ist.

5. Verwendung des linear ausgebildeten Antriebs oder Generators nach einem der Ansprüche 1 bis 4 beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen.

6. Verwendung des Antriebs nach einem der Ansprüche 1 bis 4 als rotatorischer oder linearer Positionierantrieb.

## Claims

1. An electric drive or generator, comprising
(a) a stator (2) provided with current conductors (2) and a rotor (32) magnetically cooperating with the stator, said stator and said rotor being disposed with a gap distance therebetween;
(b) at least one sensor (38) provided on the stator (2) and detecting the relative position of stator (2) and rotor (32), with an adjustability being provided with respect to that position of the rotor (32) in which the sensor (38) is responsive; and
(c) an electronic switching means controlled by said sensor (38) and establishing an electrical connection between the current conductors (10) and a current source or current sink, respectively, when stator (2) and rotor (32) are in a drive-effective or generator-effective relative position, respectively,
characterized in
(d) that the rotor (32) is provided with permanent magnets (30) cooperating with the stator (2);
(e) that the rotor (32) has separate control permanent magnets (34) disposed thereon and the sensor (38) is designed and arranged as a sensor (38) responsive to the control permanent magnets (34); and
(f) that the control permanent magnets (34) are displaceable with respect to the rotor (32) in the direction of relative motion of stator (2) and rotor (32) or the sensor (38) responsive to the control permanent magnets (34) is displaceable with respect to the stator (2) in the direction of relative motion of stator (2) and rotor (32).

2. A drive or generator according to claim 1,
characterized in that a row of control permanent magnets (34) is provided in laterally spaced manner from the row of permanent magnets (30).

3. A drive or generator according to claim 1 or 2,
characterized in that the control permanent magnets (34) are longer in the direction of relative motion of stator (2) and rotor (32) than the permanent magnets (30).

4. A drive or generator according to any one of the preceding claims,
characterized in that the stator (2) is divided into a plurality of sections each having a switching means associated therewith.

5. The use of the linear drive or generator according to any one of claims 1 to 4 for driving transportation units, in particular road vehicles, rail vehicles, magnetic leviation vehicles, fair vehicles, magazine transportation units, rolling footways, pallets, ski lifts, material conveyors.

6. The use of the drive according to any one of claims 1 to 4 as a rotational or linear positioning drive.

## Revendications

1. Mécanisme d'entraînement électrique ou générateur comportant :
a) un stator (2) pourvu de conducteurs électriques et un rotor (32) coopérant magnétiquement avec le stator (2), qui sont espacés l'un de l'autre ;
b) au moins un capteur (38), prévu sur le stator (2), qui enregistre la position relative du stator (2) et du rotor (32), une possibilité de réglage par rapport à la position du rotor (2) dans laquelle le capteur (38) réagit, étant prévue ; et
c) un dispositif de commutation électronique, commandé par le capteur (38), qui lorsque la position relative du stator (2) et du rotor (32) convient à l'entraînement ou à la fonction de générateur, établit une liaison électrique entre les conducteurs électriques (10) et une source de courant ou une source négative,
caractérisé en ce que
d) le rotor (32) est pourvu d'aimants permanents (30) qui coopèrent avec le stator (2) ;
e) des aimants permanents de commande (34) sont placés sur le rotor (32) et le capteur (38) est conçu et placé comme un capteur (38) réagissant aux aimants permanents de commande (34) ; et
f) en ce que ou les aimants permanents de commande (34) sont déplaçables par rapport au rotor (32) ou le capteur (38), réagissant aux aimants permanents (34), est déplaçable par rapport au stator (2), dans la direction du déplacement relatif du stator (2) et du rotor (32).

2. Mécanisme d'entraînement ou génerateur selon la revendication 1, caractérisé en ce qu'il est prévu une série d'aimants permanents de commande (34) espacés latéralement de la série d'aimants permanents (30).

3. Mécanisme d'entraînement ou générateur selon les revendications 1 ou 2, caractérisé en ce que les aimants permanents de commande (34) sont plus longs en direction du déplacement relatif du stator (2) et du rotor (32) que les aimants permanents (30).

4. Mécanisme d'entraînement ou générateur selon l'une des revendications précédentes, caractérisé en ce que le stator (2) est partagé en plusieurs portions à chacune desquelles est affecté un dispositif de commutation.

5. Utilisation du mécanisme d'entraînement linéaire ou du générateur selon l'une des revendications 1 à 4 pour l'entraînement d unités de transport, en particulier de véhicules routiers, de véhicules ferroviaires, de véhicules à sustentation magnétique, de véhicules forains, d'unités de transport de magasins, de trottoirs roulants, de palettes, de remontées mécaniques, de tapis de convoyage de matériels.

6. Utilisation du mécanisme d'entraînement selon l'une des revendications 1 à 4 comme mécanisme de positionnement rotatif ou linéaire.
